# EUROPEAN PATENT SPECIFICATION

(11) **EP 0 350 010 B1**
(45) Date of publication and mention of the grant of the patent: **29.09.1993**
(21) Application number: 89112280.6
(22) Date of filing: 05.07.1989
(51) Int. Cl.: G11B 11/10

(54) **Magneto-optical recording medium**
Magneto-optisches Speichermedium
Milieu d'enregistrement magnéto-optique

(30) Priority: 07.07.1988 JP 169954/88; 11.05.1989 JP 118329/89
(43) Date of publication of application: 10.01.1990
(73) Proprietor: Oki Electric Industry Co., Ltd., Tokyo (JP)
(72) Inventor: Maeno, Yoshinori Oki Electric Industry Co., Ltd., Minato-ku Tokyo (JP); Kobayashi, Masanobu Oki Electric Industry Co., Ltd, Minato-ku Tokyo (JP); Oishi, Kayoko Oki Electric Industry Co., Ltd, Minato-ku Tokyo (JP)
(74) Representative: Betten & Resch

(56) References cited:
- EP-A- 0 064 777
- EP-A- 0 192 256
- EP-A- 0 226 168
- EP-A- 0 239 974
- EP-A- 0 296 888
- DE-A- 3 335 689

## Description

### Background of the Invention

### Field of the Invention

The present invention relates to a magneto-optical recording medium, and particularly to a magneto-optical recording medium having such a reflective film as to give excellent CN ratio (carrier-to-noise ratio) and recording sensitivity.

### Prior Art

Magneto-optical recording media (hereinafter sometimes referred to in brief as "recording media") as high-density recording media having a magnetic film adapted to rewriting are under active investigation and development.

Among magneto-optical recording media constituting the magnetic films of such recording media, amorphous alloys of a rare earth metal with a transition metal (hereinafter sometimes referred to as "RE-TM alloys") have been most progressed in studies and most put into practical use since they are formed into a perpendicular anisotropy film with direction of magnetization oriented perpendicularly to the surface of the film, have a large coercive force of several hundred kA/m (kOe), and are capable of being relatively easily formed into a film by a deposition technique such as sputtering, or vacuum evaporation and deposition.

Since recording media produced using an RE-TM alloy have a perpendicular anisotropy film as the magnetic film thereof, they have excellent features of being capable of recording information up to an extremely high density of 10⁸ (bits/cm²) and being, in principle, capable of undergoing infinite repetition of erasing and rewriting information.

However, a magnetic film made of an RE-TM alloy is defective in that it has a poor corrosion resistance [see "Hikarijiki Disk" complied under the general editorship of Nobutake Imamura and published by K.K. Triceps, p. 427 (Literature I)] and exhibits only a little magneto-optical effect (Kerr effect).

Thus, there are known structures of recording media which comprise a magnetic film as mentioned above and a reflective film provided on the side of the magnetic film opposite the reading side thereof and/or protective films provided so as to sandwich the magnetic film to increase the apparent Kerr rotation by utilizing the refraction or reflection of light (see the above-mentioned Literature I, p.119).

The above-mentioned conventional magneto-optical recording media will now be described while referring to the accompanying drawings.

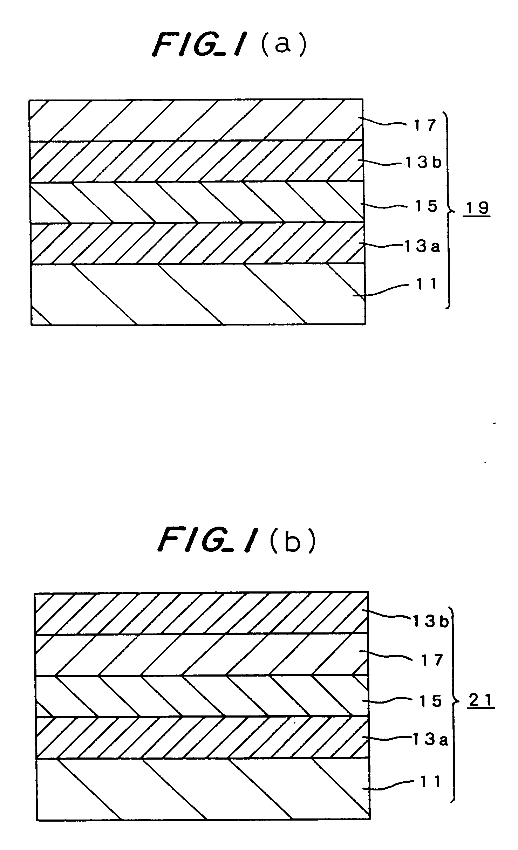

Fig. 1(a) is a schematic cross-sectional view of an example of the conventional recording media, which is illustrative of the structure thereof.

As will be understood from Fig. 1(a), a protective film 13a, a magnetic film 15, a protective film 13b and a reflective film 17 are formed in this order on the upper surface of a substrate 11 to produce a recording medium 19.

The substrate 11 is made of a material which is transparent at the wavelength of a light to be used in writing in or reading from the recording media 19. Examples of such a material include polycarbonate resins, glass, and epoxy resins.

The protective films 13a and 13b are formed by deposition of SiO, SiO₂, AlN, Si₃N₄, AlSiN, AlSiON, or other protective film material.

The magnetic film 15 is made of an RE-TM alloy as mentioned above, known examples of which include Tb-Fe alloys, Tb-Co alloys, Tb-Fe-Co alloys, and the like.

Aluminum (Al) is most widely used as the material of the reflective film 17, other examples of which include gold (Au), copper (Cu), and titanium (Ti).

As another known recording medium having a reflective film 17 as mentioned above, a recording medium 21 as shown in Fig. 1(b) is produced by forming on the upper surface of a substrate 11, a protective film 13a, a magnetic film 15, a reflective film 17 and a protective film 13b in this order.

Information writing on such a recording medium is carried out according to the so-called thermomagnetic writing system in which the recording medium to which an external magnetic field is applied is irradiated with a laser beam having a fined spot diameter of about 1 µm in such a direction that the beam advances from the substrate 11 to the magnetic film 15. More specifically, the magnetic film 15 locally heated with the above-mentioned laser beam is lowered in coercive force in the heated area thereof, wherein information is immediately written by the external magnetic field carrying information for recording. Information writing may also be carried out by means of a pit length and/or an interval between pits created by a laser beam as mentioned above.

As can be understood from the foregoing description, the recording sensitivity of a magneto-optical recording medium is greatly affected by the heat retaining properties in the magnetic film thereof and the degree of multipath reflection.

Accordingly, when the reflective film is viewed from the foregoing point of view, the reflective film is required to be made of a material having not only such a low thermal conductivity as to suppress heat dissipation at the time of information writing but also such a high reflection factor as to give efficient multipath reflection at the time of information reading.

However, conventional materials of reflective films are problematic in that a difficulty is encountered in simultaneously realizing a low thermal conductivity and a high reflection factor.

A detailed description will be made of this problem. For example, in the case of a recording medium having a reflective film made of aluminum (Al) or copper (Cu) alone, the reflective film has a relatively high reflection factor but a high thermal conductivity, which requires a large output (hereinafter referred to as a "recording power") of a laser beam for information writing to make up for the large heat dissipation from the magnetic film of the recording medium.

On the other hand, for example, in the case of a recording medium having a reflective film made of titanium, it is possible to carry out information writing with a relatively small recording power, but the reading sensitivity of the recording medium is insufficient because no sufficient enhancement due to the Kerr effect is secured because of the low reflection factor of the reflective film.

### Summary of the Invention

In view of the foregoing problems of the prior art, an object of the present invention is to provide a magneto-optical recording medium which permits information writing therein to be carried out with a small recording power and with a high reading sensitivity.

In order to attain the above-mentioned object, the present invention provides a magneto-optical recording medium comprising a magnetic film and a reflective film both provided on a substrate, wherein the reflective film is made of aluminum and titanium added thereto, as known from EP-A-0 226 168.

The recording medium of the present invention is characterised in that the amount of titanium (Ti) added to aluminum (Al) based on the total amount of Al and Ti (hereinafter referred to as the "Ti additional rate") in the reflective film is preferably more than 10 to a maximum of 50 atomic %.

The thickness of the Al-Ti reflective film is preferably in the range of 200 to 500 Å.

In the magneto-optical recording medium of the present invention, the reflective film made of the above-mentioned materials is endowed with a practically sufficient reflection factor attributed to aluminum (Al) and a lowered thermal conductivity attributed to titanium. Therefore, the recording medium of the present invention allows the recording power to be decreased while keeping the CN ratio at a practically satisfactory level. It is to be noted that the CN ratio is proportional to reflection factor X Kerr rotation.

### Brief Description of the Drawings

The foregoing and other objects and advantages of the present invention will be better understood by reference to the following description, taken in connection with the accompanying drawings, in which:
Fig. 1(a) and 1(b) are schematic cross-sectional views of structures of magneto-optical recording media, respectively, which are illustrative of conventional techniques;
Fig. 2(a) is a diagram showing correlation curves with the ordinate and the abscissa representing the recording power and the Ti addition rate, respectively, which are illustrative of a feature of magneto-optical recording media according to the present invention which were produced in Example 1;
Fig. 2(b) is a diagram showing correlation curves with the ordinate and the abscissa representing the CN ratio and the Ti addition rate, respectively, which are illustrative of another feature of magneto-optical recording media according to the present invention which were produced in Example 1;
Fig. 3 is a schematic cross-sectional view of a structure of magneto-optical recording media, with which samples were produced in some Examples; and
Figs. 4(a) and 4(b) are schematic cross-sectional views of structures of magneto-optical recording media, respectively, which are illustrative of the present invention.

### Preferred Embodiments of the Invention

Examples according to the present invention will now be described while referring to the accompanying drawings. While the following Examples will be described using preferable numerical values and other preferable conditions falling within the scope of the present invention, which are, however, merely exemplified and should not be construed as limiting the scope of the present invention.

### Example 1

The Example is concerned with addition of titanium to aluminum in accordance with the present invention. A description will be made of the production of a plurality of samples having a magnetic film and a reflective film provided in this order on a substrate with the Ti addition rate and the thickness of the reflective film being varied, and the results of measurement of the recording powers and CN ratios of the samples.

### <Production of Samples>

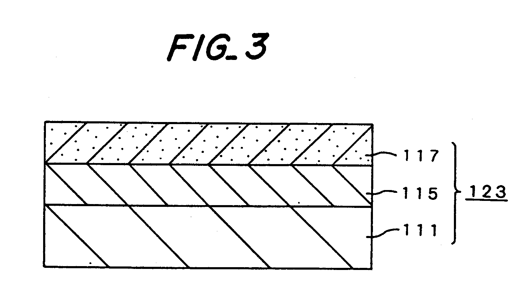

Firstly, the procedure of producing a sample in this Example will be described while referring to the schematic cross-sectional view of Fig. 3.

As can be understood from Fig. 3, a magnetic film 115 and a reflective film 117 were formed in this order on the upper surface of a substrate 111 to produce a sample 123. A more detailed description will be made below.

First, the magnetic film 115 having a thickness of about 300 Å was deposited on the upper surface of the substrate 111 made of a polycarbonate by a magnetron sputtering method using a target composed of terbium, iron and cobalt at a ratio of 22 : 70 : 8 in terms of the number of atoms. The deposition conditions included a supplied electric power of about 500 W and an argon gas pressure of 3 mTorr. Subsequently, the reflective film 117 was deposited on the surface of the magnetic film 115. The Ti addition rate in the reflective film 117 was varied in the range of 0 to 100 atomic %, while the thickness of the reflective film 117 was varied to be 20 nm, 30 nm, 40 nm or 50 nm (200 Å, 300 Å, 400 Å or 500 Å). Thus, a plurality of samples 123 were produced. The deposition conditions included a supplied electric power of about 500 W and an argon gas pressure of 3 mTorr just as in the deposition of the magnetic film 115. The Ti addition rate was varied by changing the area ratio of a target of Ti alone to a target of Al alone in terms of the areas of the surfaces thereof subject to sputtering when the two targets were mutually overlapped.

### <Procedures of Measuring Characteristics of Sample>

A description will be made of the procedures of measuring the recording power and the CN ratio of each sample produced above.

In the measurement of the recording power of every sample, the recording conditions were standardized to include the use of a light having a wavelength of 830 nm, a rotation of 1,800 r.p.m., a duty of 33 %, and a recording frequency of 3.7 MHz.

The measurement of the CN ratio of each sample was made under reading conditions, including a reading power of 1.0 mW and a band width of 30 KHz, after information writing in the sample under the above-mentioned recording conditions with a recording power adapted to the sample.

### <Results of Measurement of Characteristics of Samples>

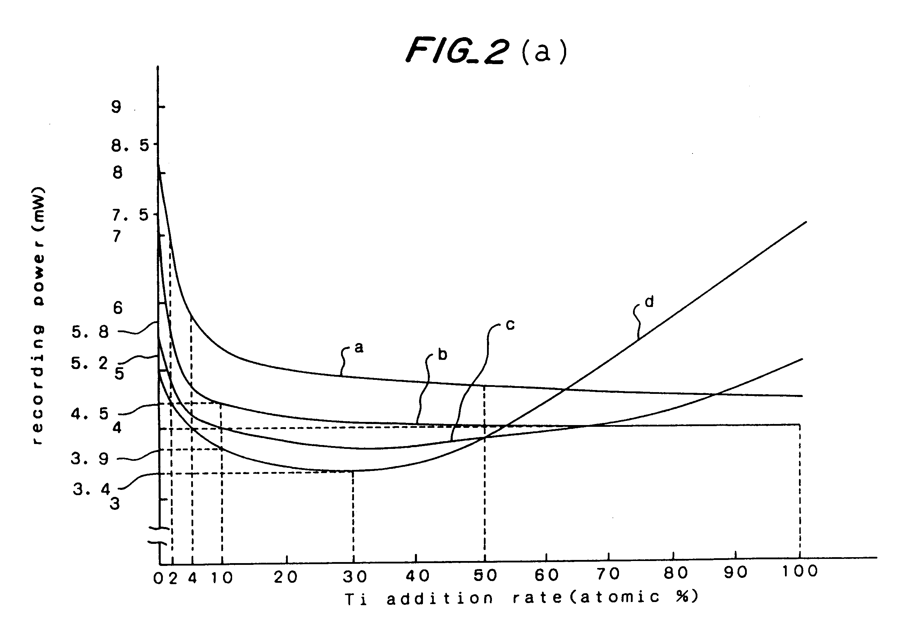

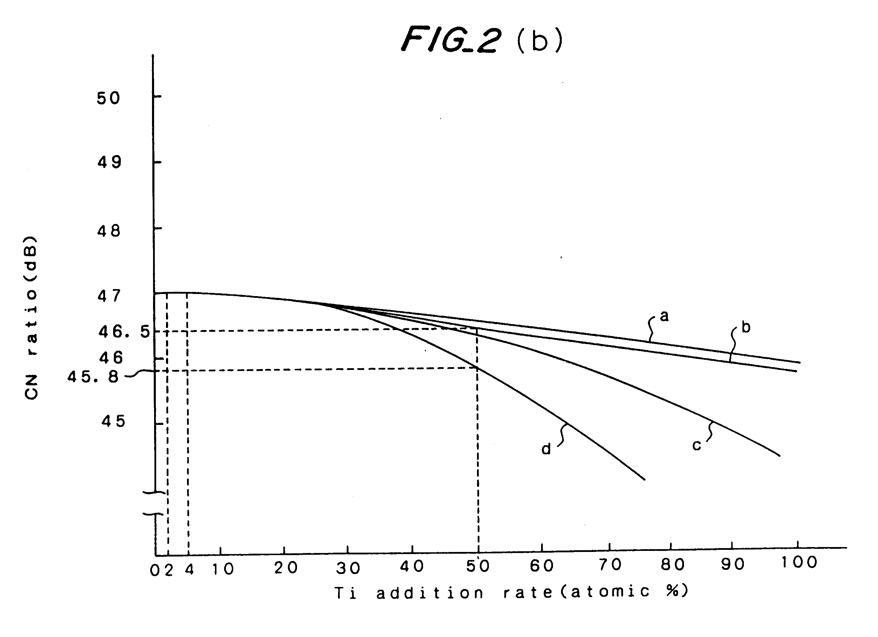

The relationships of the Ti addition rate with the recording power and the CN ratio as measured under the foregoing conditions will now be described while referring to Figs. 2(a) and 2(b).

Fig. 2(a) is a diagram showing correlation curves with the ordinate and the abscissa representing the recording power (mW) and the Ti addition rate (atomic %), respectively, which is illustrative of the relationship between the Ti addition rate and the recording power. In Fig. 2(a), the curve a is concerned with samples having a reflective film of 50 nm (500 Å) in thickness, the curve b with samples having a reflective film of 40 nm (400 Å) in thickness, the curve c with samples having a reflective film of 30 nm (300 Å) in thickness, and the curve d with samples having a reflective film of 20 nm (200 Å) thickness.

As can be understood from Fig. 2(a), in the case of samples having a reflective film made of Al alone (Ti addition rate : 0 atomic %), the recording power varied depending on the thickness of the reflective film to be about 8.5 mW for a reflective film thickness of 50 nm (500 Å) (see the curve a), about 7.5 mW for a reflective film thickness of 40 nm (400 Å) (see the curve b), about 5.8 mW for a reflective film thickness of 30 nm (300 Å) (see the curve c), and about 5.2 mW for a reflective film thickness of 20 nm (200 Å) (see the curve d). As can be understood from the foregoing results, in the case of a conventional recording medium having a reflective film made of Al alone, the recording power tends to be decreased as the reflective film thickness is decreased at least within the range covering the above-mentioned thicknesses.

The effect of decreasing the recording power by addition of Ti to Al is also greatly affected by the reflective film thickness.

This will be described in detail. In case of the samples having a reflective film of 50 or 40 nm (500 or 400 Å) in thickness, the recording power was steeply decreased as the Ti addition rate was increased within a relatively low range, and the effect of decreasing the recording power was maintained even when the Ti addition rate was increased up to 100 atomic % (see the curves a and b). Specific numerical values will be exemplified by reference to the curve b relating to the samples having a reflective film of 40 nm (400 Å) in thickness. An increase in the Ti addition rate markedly decreased the recording power. For example, in a sample produced at a Ti addition rate of 10 atomic %, the recording power could be decreased to about 4.5 mW. A further increase in the Ti addition rate from the above-mentioned 10 atomic % gradually decreased the recording power. Recording with a recording power of about 4.0 mW could be done in a sample produced at a Ti addition rate of 100 atomic %.

By contrast, in the case of the samples having a reflective film of 30 nm (300 Å) in thickness (the curve c) as well as the samples having a reflective film of 20 nm (200 Å) in thickness (the curve d), the recording power could be decreased within a relatively low range of Ti addition rate, but showed a tendency to increase when the Ti addition rate was increased beyond a certain value.

For example, in the curve d relating to the samples having a reflective film of 20 nm (200 Å) in thickness, the recording power is about 3.9 mW at a Ti addition rate of 10atomic %, and as low as about 3.4 mW at a further increased Ti addition rate of 30 atomic %. However, as the Ti addition rate was further increased beyond 30 atomic %, the recording power began to be increased and reached about 3.9 mW at a Ti addition rate of 50 atomic % and more than 7 mW at a Ti addition rate of 100 atomic %.

Next, the relationship between the Ti addition rate and the CN ratio will be described while referring to Fig. 2(b).

Fig. 2(b) is a diagram showing correlation curves with the ordinate and the abscissa representing the CN ratio (dB) and the Ti addition rate (atomic %), respectively. Also in Fig. 2(b), the characters representing the thickness of reflective film are affixed to the respective curves just like in Fig. 2(a).

As can be understood from Fig. 2(b), in the case of the samples having a reflective film made of Al alone (Ti addition rate : 0 atomic %), the CN ratio was about 47.0 dB irrespective of the reflective film thickness at least falling within the range of 20 to 50 nm (200 to 500 Å).

As can be understood from the curves, the CN ratio was gradually lowered as the Ti addition rate was increased. The smaller the reflective film thickness, the stronger the lowering tendency of CN ratio.

For example, where the reflective film thickness was set to be 40 nm (400 Å) as represented by the curve b, a CN ratio of about 46.5 dB was secured for a sample produced at a Ti addition rate of 50 atomic %.

By contrast, where the reflective film thickness was set to be 20 nm (200 Å) as represented by the curve d, a CN ratio of about 45.8 dB was secured for a sample produced at a Ti addition rate of 50 atomic %. In the case of the samples having a reflective film of 20 nm (200 Å) in thickness, the lowering tendency of the CN ratio with the increasing Ti addition rate was markedly stronger than those samples having a reflective film with a thickness as represented by either of the curves a, b and c, and the CN ratio was lowered to 45 dB or lower when the Ti addition rate was increased to 70 atomic %.

Based on the foregoing results of measurement, the preferable range of Ti addition rate in the Al-Ti reflective film will now be described in due consideration to the reflective film thickness.

As already described hereinbefore, Al is prominently excellent among known materials of reflective film in that a reflective film made of Al alone exhibits satisfactory reflection characteristics. Therefore, the influence of the Al reflective film on the CN ratio does not largely vary within the aforementioned range of reflective film thickness of 20 to 50 nm (200 to 500 Å) by virtue of the Kerr enhancement effect thereof, which is generally determined by whether the reflection characteristics of the reflective film are good or not.

When attention is paid to the thermal characteristics of material, which have a great influence on the recording power, however, Al dissipates heat generated by irradiation of a recording medium with a laser beam at the time of information writing because Al has a relatively high thermal conductivity. Therefore, in the case of a reflective film made of Al alone, the larger the thickness of the reflective film , the greater the necessary recording power.

As can be understood from Figs. 2(a) and 2(b) addition of Ti to Al in accordance with the present invention provides a slightly deteriorating tendency of reflection characteristics and a greatly improving tendency of thermal characteristics in keeping with the increasing Ti addition rate within the relatively low range thereof, when the above-mentioned characteristics are compared with those of a reflective film made of Al alone.

First, attention will be paid to the influence of Ti addition to Al on the CN ratio. The deteriorating tendency of CN ratio in keeping with the increasing Ti addition rate is gentle in every reflective film thickness in Fig. 2(b). The reason for this is believed to be that a large film thickness falling in the range of 200 to 500 Å can make up for the reflection characteristics of the whole reflective film through the transmission, per unit thickness, of the reflective film is increased by Ti addition to Al to generally deteriorate the reflection characteristics thereof.

As for the influence of Ti addition to Al on the recording power, when the reflective film thickness is large, a decrease in the thermal conductivity of the reflective film by virtue of Ti addition to Al is dominate to realize the increasing effect of reducing the recording power with the increasing Ti addition rate. In contrast, when the film thickness is small, a decreasing tendency of the thermal conductivity of the reflective film is dominant with the increasing Ti addition rate within the relatively low range thereof, but an increasing tendency of the aforementioned transmission of the reflective film (deteriorating tendency of reflection characteristics) is dominant beyond a certain Ti addition rate to provide an increasing tendency of the recording power with the increasing Ti addition rate as a result of the total effect of decreasing thermal conductivity and dominantly increasing transmission.

Accordingly, it will be understood that, for the purpose of realizing a lower recording power than that in the case of Al alone while maintaining a practically satisfactory CN ratio, it will suffice to set a preferable range of Ti addition rate while keeping in mind a desired effect of reducing the recording power by Ti addition to Al in due consideration to the reflective film thickness.

By reference to the curves a to d in Fig. 2(a), it will be seen, in every reflective film thickness, that setting the Ti addition rate at 10 atomic % or higher will suffice from the viewpoint of substantial effect of reducing the recording power, and that, when the Ti addition rate is increased beyond 10 atomic %, the inclination of every curve becomes gentle to demonstrate that a stable recording power would be realized even if there were a slight lot-to-lot variation of Ti addition rate.

On the other hand, as for the upper limit of preferable Ti addition rate, it will be seen from the curve d for the reflective film thickness of 20 nm (200 Å) that setting the Ti addition rate at 50 atomic % or lower will suffice, when attention is paid to the value of Ti addition rate at which the recording power begins to steeply increase with the increasing Ti addition rate.

Accordingly, in the Al-Ti reflective film of the recording medium of the present invention, the Ti addition rate is preferably in the range of 10 to 50 atomic %.

As for the CN ratio, it is required according to the international standard of ISO (International Organization for Standardization) that the CN ratio as measured when writing is being done at 1,800 r.p.m. at a frequency of 3.7 MHz should be at least 45 dB. In Example 1, the preferable range of Ti addition rate was determined by producing and examining the samples having a structure as shown in Fig. 5. With an Al-Ti reflective film formed within the above-mentioned suitable range of Ti addition rate, a recording medium having not only a CN ratio complying with the above-mentioned international standard [see Fig. 2(b)] but also excellent recording characteristics can be obtained.

### Example 2

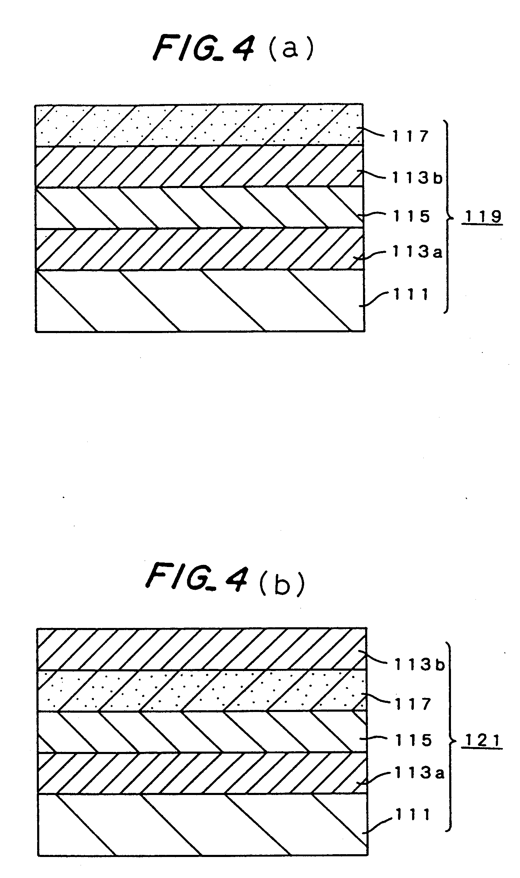

In Example 2, recording media of a laminated structure having protective films as shown in Fig. 4(a) were produced as one type of magneto-optical recording media.

A description will be made of the thickness and materials of the constituent parts of a recording medium. A protective film 113a made of silicon aluminum nitride (AlSiN) and having a thickness of 70 nm (700 Å), a magnetic film 115 made of the aforementioned Tb-Fe-Co composition and having thickness of 30 nm (300 Å), and a protective film 113b made of the above mentioned AlSiN and having a thickness of 100 nm (1,000 Å) were formed by deposition in this order on the upper surface of a substrate 111 made of a polycarbonate. Thereafter, a reflective film 117 having a thickness of 20 nm (200 Å) was formed by deposition on the surface of the protective film 113b to produce a magneto-optical recording medium 119. In this manner, a plurality of recording media 119 were produced by varying the Ti addition rate in the reflective film 117 in the range of 0 to 100 atomic %. The deposition of these constituent parts including the protective films was done under the same conditions as Example 1.

The recording media thus produced were examined using the aforementioned procedures and conditions with respect to recording power and CN ratio. The results of measurement are shown in the following table.

**Table**

| | Ti Addition Rate (atomic %) | Recording Power (mW) | CN Ratio (dB) |
|---|---|---|---|
| Examples | 2 | 5.6 | 49.9 |
| | 4 | 5.0 | 49.9 |
| | 10 | 4.5 | 49.8 |
| | 30 | 4.2 | 48.8 |
| | 50 | 5.0 | 46.0 |
| Comparative Examples | 0 | 7.0 | 50.0 |
| | 100 | 9.0 | 43.2 |

As can be understood from the results in the table, the aforementioned suitable range of Ti addition rate is also applicable to magneto-optical recording media of the same laminated structure with deposited protective films as has heretofore been well known in the art, in view of the fact that, in the recording media of the examples having a reflective film formed at a Ti addition rate falling within the aforementioned preferable range, a decrease in the recording power could be attained while maintaining the CN ratio at a practically satisfactory level.

### Example 3

In Example 3, recording medium of a laminated structure having protective films as shown in Fig. 4(b) is also produced as another type of magneto-optical recording media. A protective film 113a, a magnetic film 115, a reflective film 117 and a protective film 113b are formed by deposition in this order on the upper surface of a substrate 111 to produce a magneto-optical recording medium. The thickness and materials of the constituent parts of the recording medium are the same as those of the aforementioned recording medium as shown in Fig. 4(a). The deposition of these constituent parts including the protective films is done under the same conditions as Examples 1. It is estimated that recording power and CN ratio with respect to Ti addition rate of the recording medium of Example 3 having the structure as shown in Fig. 4(b) are substantially same as or similar to those of the recording medium having the structure as shown in Fig. 4(a).

While the examples of the present invention have been described hereinbefore, it will be obvious that the present invention is not limited to these examples.

For example, the description of the foregoing examples has been made while exemplifying the materials and thickness of the substrates, magnetic films and protective films of the magneto-optical recording media as well as other specific conditions. As can be understood from a comparison of Figs. 2(a) and 2(b) with the table for the recording media having an Al-Ti reflective film, however, the preferable or suitable range of Ti addition rate may vary depending on the reflective film thickness and the laminated structure of recording medium in connection with desired recording power and CN ratio.

Accordingly, it will be apparent that the materials and thicknesses of the constituent parts of a recording medium, the positional relationship therebetween, and other numerical and specific conditions are capable of arbitrary modification or alteration in designing within the scope of the object of the present invention.

As will be apparent from the foregoing description, the magneto-optical recording medium of the present invention can be lowered in the thermal conductivity of the reflective film thereof without substantially lowering the reflection factor of the reflective film from that inherent in aluminum (Al) by forming the reflective film from aluminum (Al) and titanium (Ti) added thereto. Thus, the recording power can be decreased by virtue of the lowered thermal conductivity of the reflective film while maintaining the CN ratio at a practically satisfactory level because of no significant decrease in the reflection factor of the reflective film.

Thus, application of the present invention can provide an excellent magneto-optical recording medium adapted to information writing with a small recording power and a reading sensitivity.

## Claims

1. A magneto-optical recording medium comprising a magnetic film and a reflective film both provided on a substrate, wherein said reflective film is made of aluminum and titanium added thereto, characterised in that the amount of titanium added to aluminum is in the range of more than 10 to a maximum of 50 atomic % based on the total amount of said aluminum and said titanium.

2. A magneto-optical recording medium as claimed in claim 1, wherein the thickness of said reflective film is in the range of 20 to 50 nm (200 to 500 Å).

3. A magneto-optical recording medium as claimed in claim 1, which further comprises a first protective film provided between said substrate and said magnetic film, and a second protective film provided between said magnetic film and said reflective film.

4. A magneto-optical recording medium as claimed in claim 1, which further comprises a first protective film provided between said substrate and said magnetic film, and a second protective film provided on said reflective film provided on said magnetic film.

## Patentansprüche

1. Magneto-optisches Aufzeichnungsmedium mit einer magnetischen Schicht und einer reflektierenden Schicht, die beide auf einem Substrat vorgesehen sind, wobei die reflektierende Schicht aus Aluminium und hierzu zugefügtem Titan hergestellt ist, dadurch gekennzeichnet, daß die Menge des dem Aluminium zugefügten Titans im Bereich von mehr als 10 bis maximal 50 Atomprozent, bezogen auf die Gesamtmenge des Aluminiums und des Titans, liegt.

2. Magneto-optisches Aufzeichnungsmedium nach Anspruch 1, wobei die Dicke der reflektierenden Schicht im Bereich von 20 bis 50 nm (200 bis 500 Å) liegt.

3. Magneto-optisches Aufzeichnungsmedium nach Anspruch 1, welches weiterhin eine erste Schutzschicht umfaßt, die zwischen dem Substrat und der Magnetschicht vorgesehen ist, sowie eine zweite Schutzschicht, die zwischen der Magnetschicht und der reflektierenden Schicht vorgesehen ist.

4. Magneto-optisches Aufzeichnungsmedium nach Anspruch 1, welches weiterhin eine erste Schutzschicht umfaßt, die zwischen dem Substrat und der Magnetschicht vorgesehen ist, sowie eine zweite Schutzschicht, die zwischen der reflektierenden Schicht und der Magnetschicht vorgesehen ist.

## Revendications

1. Support d'enregistrement magnéto-optique comportant un film magnétique et un film réfléchissant situés tous deux sur un substrat, dans lequel ledit film réfléchissant est formé d'aluminium auquel du titane est additionné, caractérisé en ce que
la quantité de titane additionné à l'aluminium est dans la plage de plus de 10 jusqu'à un maximum de 50 % en valeur atomique sur la base de la quantité totale dudit aluminium et dudit titane.

2. Support d'enregistrement magnéto-optique selon la revendication 1, dans lequel l'épaisseur dudit film réfléchissant est dans la plage de 20 à 50 nanomètres (200 à 500 Å).

3. Support d'enregistrement magnéto-optique selon la revendication 1, qui comporte en outre un premier film protecteur prévu entre ledit substrat et ledit film magnétique, et un second film protecteur prévu entre ledit film magnétique et ledit film réfléchissant.

4. Support d'enregistrement magnéto-optique selon la revendication 1, qui comporte en outre un premier film protecteur prévu entre ledit substrat et ledit film magnétique, et un second film protecteur prévu entre ledit film réfléchissant situé sur ledit film magnétique.
